# EUROPÄISCHE PATENTANMELDUNG

(11) **EP 2 037 214 A1**
(43) Veröffentlichungstag der Anmeldung: **18.03.2009**
(21) Anmeldenummer: 07116509.6
(22) Anmeldetag: 14.09.2007
(51) Int. Cl.: G01B 11/00

(54) **Verfahren und Messgerät zum vermessen von Oberflächen**

(71) Anmelder: Leica Geosystems AG, 9435 Heerbrugg (CH)
(72) Erfinder: Siercks, Knut, CH-9015, St. Gallen (CH); Jensen, Thomas, CH-9400, Rorschach (CH); Schneider, Klaus, A-6850, Dornbirn (AT)
(74) Vertreter: Harmann, Bernd-Günther

(57) **Zusammenfassung**

In einem Verfahren zur Vermessung von Oberflächen (7") mit einem Erzeugen eines frequenzmodulierten Laserstrahls, , Emittieren des Laserstrahls als Messstrahlung (MS) auf die Oberfläche, Empfangen der von der Oberfläche (7") zurückgestreuten Messstrahlung (MS) und interferometrischen Entfernungsmessen von einem Bezugspunkt zur Oberfläche (7"), wobei die Messstrahlung (MS) während eines abtastenden Führens über die zu vermessende Oberfläche emittiert und empfangen wird, werden Abweichungen vom im wesentlichen senkrechten Auftreffen der Messstrahlung (MS) auf die Oberfläche (7") beim Entfernungsmessen algorithmisch berücksichtigt und/oder beim abtastenden Führen durch Steuern des Emittierens der Messstrahlung (MS) vermieden oder verringert.

## Beschreibung

Die Erfindung betrifft ein Verfahren zum Vermessen von Oberflächen nach dem Oberbegriff des Anspruchs 1 und ein ebensolches Messgerät nach dem Oberbegriff des Anspruchs 11 sowie ein Computerprogrammprodukt.

In vielen Anwendungsbereichen besteht das Bedürfnis, Oberflächen von Objekten und damit die Objekte selbst mit hoher Genauigkeit zu vermessen. Dies gilt insbesondere für die fertigende Industrie, für die das Vermessen und Überprüfen von Oberflächen von Werkstücken hohe Bedeutung hat.

Für diese Anwendungen existiert eine Reihe von Messgeräten, die für spezielle Aufgaben ausgelegt sind und auch als Koordinatenmessgeräte oder -maschinen bezeichnet werden. Diese Messgeräte vermessen die Oberfläche, indem ein mechanischer Kontakt hergestellt und die Oberfläche abgetastet wird. Beispiele hierfür sind Portalmessmaschinen, wie sie z.B. in der DE 43 25 337 oder DE 43 25 347 beschrieben werden. Ein anderes System beruht auf der Verwendung eines Gelenkarms, dessen am Ende des mehrteiligen Arms angeordneter Messsensor entlang der Oberfläche bewegt werden kann. Gattungsgemässe Gelenkarme werden beispielsweise in US 5,402,582 oder EP 1 474 650 beschrieben.

Im Stand der Technik wird bei solchen Koordinatenmessgeräten als Standardmesssensor eine taktile Probe verwendet, welche aus einer Rubinkugel besteht, die auf einem Messstab montiert ist, dessen Auslenkung bei der Antastung über ein Schaltelement oder wegmessendes Element bestimmt wird. Anhand des Schaltpunkts oder Auslenkungswegs wird der Ort des Kontakts berechnet. Dieser Ansatz ist zwar für Punktmessungen eine ausgereifte Lösung, für scannende Anwendungen ist diese technische Lösung aufgrund der auftretenden Reibungskräfte, Antastkräfte und mechanischen Trägheiten nur für relativ langsame Messraten geeignet. Zudem führen Verunreinigungen und Abrieb an der Kugel des Sensors und des Messobjekts zu Messfehlern. Dabei erfordert aber gerade z.B. die Innenmessung von Bohrlöchern eine präzise und schnelle Messung, um die Welligkeit und Rundheit der Teile zu bestimmen, besonders wenn diese direkt in der Produktionslinie durchgeführt werden sollen.

Deshalb werden im Stand der Technik bereits Ansätze zur berührungslosen Vermessung verfolgt. Die für diesen Zweck bei Koordinatenmessmaschinen verwendeten optischen Technologien basieren zum einen auf Kameras, die in Auflicht oder Durchlicht, z.B. mittels Schattenwurf, unter Zuhilfenahme von Bilderkennung Abmessungen von Teilen erfassen. Innenbohrungen sind auf diese Weise allerdings nicht charakterisierbar, ebenso sind Unebenheiten von Flächen lediglich unter Anwendung einer strukturierten Beleuchtung erfassbar.

Triangulationsbasierte Systeme erlaubt zwar recht genaue Abstandsbestimmungen, jedoch sind die Abmessungen des Messkopfes bei Genauigkeiten im µm-Bereich und Messabständen im cm-Bereich wegen der erforderlichen Basis zwischen den optischen Achsen von Sender und Empfänger sehr groß. Dieses gilt auch für konfokale und chromatisch konfokale Messprinzipien, welche grosse Optikabmessungen erforderlich machen, wenn ein Messbereich von einigen cm realisiert werden soll. Problematisch ist zudem sowohl bei der Triangulation als auch beim konfokalen Verfahren eine Teilabschattung des Mess- oder Beobachtungsstrahls, was zu starken Messfehlern führt.

Ein weiterer Ansatz nutzt Weisslichtinterferometrie zur hochpräzisen Vermessung. Hierbei erfolgt der Einsatz entweder scannend, d.h. durch Verstellung des Interferometers, und damit langsam oder bei spektral aufgelöster Detektion in der Regel unter Beschränkung auf einen Messbereich von wenigen mm.

Ein ähnlicher interferometrischer Ansatz ist beispielsweise aus der WO 92/19930 bekannt, wobei hier jedoch die Aufnahme von Tiefenprofilen menschlichen Gewebes im Bereich der Medizintechnik im Vordergrund steht.

Aus der EP 1 744 119 ist ein System zur Oberflächenvermessung mit optischer Kohärenz-Tomographie und einer frequenzmodulierten Quelle bekannt. Hierbei wird ein Faser-Ringlaser durch ein akustisch durchstimmbares Filter-Element durchstimmbar gestaltet. Die Laserstrahlung wird dann zur interferometrischen Vermessung von Oberflächen in einem Common-Path-Interferometer, d.h. einem Interferometer, das für Mess- und Referenzstrahlgang zumindest teilweise gleiche Komponenten bzw. Strahlgänge verwendet, genutzt. Die Referenzdistanz wird hierbei durch einen Reflex im Messarm des Interferometers bereitgestellt. Zur Kalibrierung der Wellenlänge wird ein Referenzinterferometer verwendet. Dieser Aufbau ist zur schnellen, berührungslos abtastenden Vermessung von Oberflächen zwar grundsätzlich geeignet, setzt aber implizit günstige Geometrieverhältnisse voraus, wie sie bspw. bei der dargestellte Vermessung von zylindrischen Öffnungen gegeben sind. Dieser Ansatz ist in dieser Auslegung jedoch nicht für die hochpräzise Vermessung von Oberflächen mit beliebigen Geometrien und Flächenverläufen geeignet.

Eine Aufgabe besteht darin, ein verbessertes Messverfahren bzw. Messgerät zur Vermessung von Oberflächen bzw. zur Erfassung von Oberflächentopographien bereitzustellen.

Eine weitere Aufgabe besteht darin, ein Messverfahren bzw. Messgerät bereitzustellen, welches mit keiner oder nur geringer Abhängigkeit von Gestalt und Struktur der anzumessenden Oberfläche hochgenaue und schnelle Entfernungsmessungen ermöglicht.

Diese Aufgaben werden durch die Gegenstände der Ansprüche 1 bzw. 11 oder der abhängigen Ansprüche gelöst bzw. die Lösungen weitergebildet.

Die Erfindung nutzt ein interferometrisches Messprinzip mit frequenzmodulierter, d.h. durchstimmbarer Laserquelle, wobei die Messungen somit in der Frequenzdomäne erfolgen. Abweichungen eines senkrechten Auftreffens des Laserstrahls auf die Oberfläche beim Entfernungsmessen werden erfindungsgemäss algorithmisch oder beim abtastenden Führen des optischen Probenkopfs als Messsensor steuernd berücksichtigt, wobei auch beide Ansätze kombiniert werden können. Diesem Ansatz liegt die Erkenntnis zugrunde, dass ohne eine solche algorithmische oder steuerungsseitige Korrektur bzw. Anpassung an den Oberflächenverlauf die gewünschte Genauigkeit nicht oder nicht mit der erforderlichen Abtastrate erreichbar ist, da durch die Charakteristik der Laserstrahlung eine die Messung in Winkelabhängigkeit beeinflussende Wechselwirkung mit der Oberfläche erfolgt.

Für den beabsichtigten Einsatzbereich des optischen Systems in industriellen Koordinatenmessgeräten mit Freistrahlmessungen von einigen cm mit kompakten Probenköpfen mit Durchmessern im Bereich von Rubinkugeln wird das bereits erwähnte interferometrische Verfahren verwendet. Bei dieser frequenzmodulierten Interferometrie, wird eine Quelle verwendet, welche möglichst breitbandig und in kurzer Zeit durchstimmbar sein sollte. Zudem besteht das Erfordernis einer Schmalbandigkeit mit einer Kohärenzlänge von einigen cm. Das Durchstimmen der Quelle wird über ein Kalibrationsinterferometer, dessen Länge sehr präzise bekannt ist, referenziert. Um Umwelteinflüsse im Messinterferometer soweit wie möglich zu eliminieren, wird die Referenzfläche nach Möglichkeit auf die letzte Oberfläche des optischen Probenkopfes gelegt, so dass ein sogenanntes Common-Path-Interferometer realisiert wird. Hierbei ist es vorteilhaft, wenn eine ausreichende Lichtmenge von dieser Oberfläche wieder in die monomodale Faser eingekoppelt wird, wohingegen andere optische Übergänge möglichst kein Signal in diese Faser zurückkoppeln sollten.

Die Laserquelle wird vorzugsweise als Faserringlaser mit einem optischen Halbleiterverstärker als Verstärkungsmedium und einem durchstimmbaren Filterelement ausgebildet. Das durchstimmbare Element kann beispielsweise als Fabry-Perot-Filter oder als akustisch durchstimmbares Fibre-Bragg-Grating ausgebildet sein. Weitere Elemente stellen optische Koppler oder Isolatoren dar, deren Anwendung und Integration in ein solches System dem Fachmann bekannt sind.

Die mit dieser Anordnung grundsätzlich mögliche hochpräzise Messung zu Oberflächen erfährt jedoch durch deren Lage und Gestalt Einflüsse, die zu berücksichtigen sind, wenn eine schnelle und hochgenaue Messung realisiert werden soll. Rauhe Zieloberflächen verursachen in der kohärenten Beobachtung sogenannte Speckles, d.h. ortsabhängige Intensitätsvariationen, die aufgrund der wellenlängenabhängigen geometrischen Bedingungen entstehen. Bei der beugungsbegrenzten Auslegung der Optik für einen Fasersensor entspricht der abgebildete Laserfleck auf der Zieloberfläche in der Faserebene praktisch der Airy-Scheibe, d.h. der Point-Spread-Funktion. Bei einer rauhen Zieloberfläche bleibt dieses so gültig, wobei die kleinste Größe eines Speckles durch die Point-Spread-Funktion oder Punkt-Verbreiterungs-Funktion limitiert ist, allerdings ist die Lage des Speckles in der Faserebene undefiniert. Dieser Effekt kann zu einem deutlichen Intensitätseinbruch führen, wobei die Distanzinformation bei senkrechten Targets hiervon nicht oder nur wenig beeinflusst ist.

Kommt es zu einer Verkippung des Targets, so zeigt das Interferogramm eine deutliche Variation in der Amplitude, die bis zur völligen Auslöschung in einem schmalen Wellenlängenbereich führen kann. Diese Einflüsse sind dabei abhängig vom Grad der Verkippung, d.h. der Abweichung des Einfallswinkels der Messstrahlung zur Flächennormalen oder der Senkrechten zur Tangente der Oberfläche, sowie von der Oberflächenstruktur.

Eine Möglichkeit zur Berücksichtigung dieser Einflüsse kann algorithmisch durch eine adaptierte Auswertung erfolgen. Durch die Einführung eines Schwellwertes kann die Auswertung der Phaseninformation auf Amplitudenwerte oberhalb dieses Schwellwertes limitiert werden, da nur dieser Bereich verlässliche Informationen über die mittlere Distanz zur Oberfläche enthält. Alternativ zum Schwellwert kann jedoch auch eine amplitudengewichtete Phasenauswertung erfolgen, wodurch sich die Unsicherheit reduziert.

Bei diesem Ansatz wird allerdings durch die reduzierte Datenmenge die Messunsicherheit erhöht. Dieser Effekt ist aber stochastisch und lässt sich durch Mittelung von Messungen reduzieren. Eine fehlerhafte Phasenauswertung auf Grund einer ungünstigen Speckle-Lage ist hingegen systematisch und damit nicht durch Mittelung von Einzelmessungen eliminierbar.

Eine diese Einflüsse vermeidende oder zumindest verringernde Alternative stellt die steuerungsseitige Berücksichtigung einer auftretenden Verkippung der Zieloberfläche dar, bei welcher der Abtastvorgang, d.h. die Bewegung des Probenkopfes, entsprechend angepasst wird. Hierbei können jedoch auch beide Ansätze kombiniert werden, z.B. indem der Probenkopf nur innerhalb eines gewissen Winkelbereichs zur Oberfläche ausgerichtet wird und die aufgenommenen Messwerte zusätzlich algorithmisch adaptiert werden, bspw. durch die oben dargestellte Verwendung eines Schwellenwertes.

Die Steuerung der Abtastbewegung kann dabei auf der Basis der aufgenommenen Meßwerte selbst erfolgen, d.h. ohne zusätzliche unterstützende Grobmeßvorgänge. Hierfür wird der Verlauf der Amplitude über die Wellenlänge analysiert, woraus auf die Zuverlässigkeit der Auswertung geschlossen werden kann. Bei entsprechend ungleichmäßigem Verlauf kann dies als Hinweis interpretiert werden, dass die Zieloberfläche gegenüber dem Messstrahl gekippt sein muss. Diese Information kann direkt zur Verstellung der Messvorrichtung bzw. deren Mittel zur Führung des optischen Probenkopfes bezüglich des Objektes herangezogen werden, bis ein gleichmäßiger Amplitudenverlauf beobachtet wird und der systematische Fehler in der Messung vernachlässigbar ist. Auf diese Weise ist die Unregelmäßigkeit des Amplitudenverlaufs aus der frequenz-modulierten Interferometrie über einen großen Wellenlängenbereich eine Regelgröße für die Positionierung des optischen Probenkopfes durch das Koordinatenmessgerät. Der Vorteil dieses Ansatzes liegt darin, dass keine weiteren zusätzlichen Meßkomponenten erforderlich werden.

Stehen für die Oberfläche beschreibende Informationen zur Verfügung, wie sie bspw. durch eine Modellierung, z.B. als CAD-Modell, oder vorangehende Grobmessungen realisierbar sind, so kann eine Steuerung anhand des bekannten Ortes des Probenkopfes und der zumindest grob oder im Soll-Zustand bekannten Topographie direkt erfolgen.

Hierfür wird die Lage des Objekts zunächst hinreichend genau im Koordinatensystem der Koordinatenmessmaschine bestimmt. Dies kann durch das Vermessen von in der räumlichen Lage bekannten Messpunkten oder Strukturen des Messobjekts erfolgen. Basierend auf bekannten CAD-Daten oder andere Modell- oder Grobmessdaten kann dann die Abtastung geplant und durchgeführt werden. Dies kann durch die Maschine automatisch, halbautomatisch oder durch den Bediener manuell erfolgen. Hierbei wird die Messpunktdichte und Messpunktlage auf dem Messobjekt festgelegt. Weiterhin wird die Ausrichtung des Messstrahls so festgelegt, dass der Messstrahl hinreichend orthogonal zur Messobjektoberfläche während der Messungen ausgerichtet ist, und wenn erforderlich auch die Störeinflüsse von Mehrfachreflektionen minimiert werden. In einem möglichen Anwendungsfall kann dann nachfolgend an den notwendigen Stellen in einem weiteren Schritt die Differenz zwischen CAD-Daten und Messobjekt als Soll-Ist-Vergleich bestimmt werden.

Ist das Objekt hingegen nicht modelliert oder nur sehr grob vermessen, so müssen die notwendigen Messobjektkoordinaten aus den im Messvorgang gesammelten Daten gewonnen werden, um den Messstrahl hinreichend orthogonal zur Messobjektoberfläche auszurichten. Alternativ oder ergänzend zu den vorherigen Ansätzen kann hierfür im Zusammenhang mit der eigentlichen Objektvermessung die Umgebung des zu vermessenden Punktes oder Bereiches durch eine grobe Vormessung in ihrer räumlichen Lage und ggf. in ihrem Verlauf bestimmt werden. Hierzu wird bewusst ein höherer Messfehler in Kauf genommen, da keine hochpräzisen Meßwerte sondern nur Abschätzungen der Orientierung der Fläche, d.h. die Richtung der Flächennormalen benötigt werden. Bei der anschließenden genauen Messung kann aus der Grobmessung auf die jeweils aktuelle Orientierung der Fläche des nächsten Messpunktes geschlossen werden und der Strahlgang durch Bewegung der Mittel zur Führung des Probenkopfes entsprechend orientiert werden.

Bei einem abtastenden Meßvorgang stehen jedoch nach einigen anfänglichen Messungen auch Daten der letzen Meßpunkte des aktuellen Messpfades zur Verfügung, aus denen der zukünftige Verlauf des Meßpfades abgeschätzt werden kann. Dies ist beispielsweise möglich, wenn für die abzutastende Oberfläche maximale oder minimale Krümmungsradien bekannt sind oder das Material oder der Verwendungszweck eines Werkstückes von vorneherein einen gewisse Verlauf der Oberfläche bedingt, z.B. beim Prüfen des Schliffs einer optischen Linse oder eines astronomischen Spiegels. Beim Scannen kann damit aus der Historie der letzten gemessenen Punkte auf die zukünftigen Punkte geschlossen, d.h. der zukünftige Pfad extrapoliert werden und so die ortsabhängige Veränderung der Flächennormalen abgeschätzt werden. Entsprechend ist die Koordinatenmessmaschine nachzuregeln, um eine möglichst zur Oberflächentangente parallele Bewegung des Probenkopfes zu erreichen.

Ein weiterer Ansatz, der auch grundsätzlich mit den vorstehenden Lösungen kombiniert werden kann, basiert auf der Nutzung von Grobmessungen, die auch mit anderen Meßprinzipien bzw. zusätzlichen Komponenten durchgeführt werden können. Neben ebenfalls abtastenden oder scannenden Grobmessungen können insbesondere parallele oder sequentielle Messungen zu drei Meßpunkten in Umgebung des Auftreffpunktes des eigentlichen Laser-Messstrahls erfolgen.

Solche Messungen oder Dreipunktmessungen können beispielsweise über folgende Verfahren erfolgen.
■ Pneumatisch. Pneumatische Sensoren arbeiten ebenfalls berührungslos und bestimmen die Distanz aus dem Druckabfall.
■ Taktil, d.h. kontaktierende, mechanische Sensoren.
■ Lasertriangulation.
■ Konfokale Wegsensoren.
■ Laser-Laufzeit-Wegsensoren.
■ Kapazitive Wegsensoren.
■ Wirbelstrom-Wegsensoren.
■ Induktive Wegsensoren.

Für einige dieser Lösungen geeignete Sensortypen werden bspw. von der Fa. Micro-Epsilon angeboten.

Ein erfindungsgemässes Verfahren und ein erfindungsgemässes Messgerät zum Vermessen von Oberflächen werden nachfolgend anhand von in der Zeichnung schematisch dargestellten Ausführungsbeispielen rein beispielhaft näher beschrieben oder erläutert. Im einzelnen zeigen
- Fig.1: die schematische Darstellung der Messanordnung eines erfindungsgemässen Messgerätes;
- Fig.2: die Darstellung der Hauptkomponenten zur Durchführung eines erfindungsgemässen Verfahrens als Blockschaltbild;
- Fig.3: die Darstellung einer ersten Ausführungsform eines optischen Probenkopfes für ein erfindungsgemässes Messgerät;
- Fig.4a-b: die schematische Darstellung des Strahlgangs in der ersten und einer weiteren Ausführungsform des optischen Probenkopfes für ein erfindungsgemässes Messgerät;

- Fig.5a-h: die Darstellung von alternativen Ausführungsformen des optischen Probenkopfes für ein erfindungsgemässes Messgerät;
- Fig.6a-b: die Darstellung von Messinterferogramm, Phasenund Amplitudenverlauf für ein nicht gekipptes rauhes Ziel;
- Fig.7a-b: die Darstellung von Messinterferogramm, Phasenund Amplitudenverlauf für ein gekipptes rauhes Ziel und den Ansatz eines Schwellwertkriteriums als erste Ausführungsform des erfindungsgemässen Verfahrens;
- Fig.8: die schematische Darstellung der Wirkung der ersten Ausführungsform des erfindungsgemässen Verfahrens für das gekippte rauhe Ziel;
- Fig.9: die schematische Darstellung einer zweiten Ausführungsform des erfindungsgemässen Verfahrens und
- Fig.10: die Darstellung einer Ausführungsform eines Probenkopfes mit parallelen Grobmessungen für ein erfindungsgemässes Messgerät.

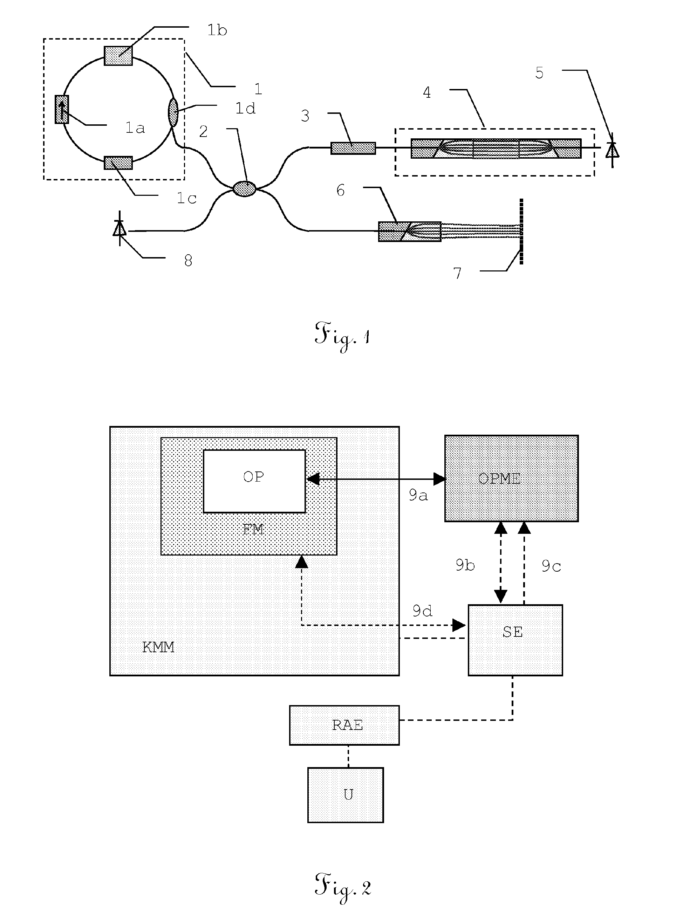

Fig.1 zeigt die schematische Darstellung der interferometrischen Entfernungsmessanordnung eines erfindungsgemässen Messgerätes mit einer frequenzmodulierten Laserquelle 1 zur Erzeugung wenigstens einen Laserstrahls und einem Strahlungsdetektor 8 zum Empfang der von einer Oberfläche 7 zurückgestreuten Messstrahlung. Die in Faseroptik als Faser-Ringlaser aufgebaute frequenzmodulierte Laserquelle 1 umfasst dabei eine optischen Isolator 1a, einen optischen Halbleiterverstärker 1b sowie ein durchstimmbares Filterelement 1c, das beispielsweise als Fabry-Perot-Element ausgebildet sein kann. Zur Auskopplung wird ein erster optischer Koppler 1d verwendet, der wiederum mit einem zweiten optischen Koppler 2 verbunden ist. Die frequenzmodulierte Laserquelle ist dabei vorzugsweise so ausgelegt, dass sie eine zentrale Wellenlänge zwischen 1,3 und 1,55 µm und einen durchstimmbaren Wellenlängenbereich von mehr als 40 nm bei einer dynamischen Linienbreite von unter 0,02 nm und einer Kohärenzlänge von mehr als 60 nm aufweist. Die Kohärenzlänge ist dabei so lang zu wählen, dass auch Messungen über eine Tiefen- bzw. Entfernungsbereich von einigen cm zu erreichen sind.

Die von der Laserquelle erzeugte Laserstrahlung wird über den zweiten optischen Koppler 2 in ein Kalibrierinterferometer 4 mit einem optischen Detektor 5 geführt, wobei dieses Kalibrierinterferometer 4 insbesondere in Etalon- oder Mach-Zehnder-Konfiguration ausgeführt sein kann. Dieses Kalibrierinterferometer 4 dient dabei der Berücksichtigung bzw. Kompensation von Nichtlinearitäten im Durchstimmverhalten.

Der zweite Ausgang des zweiten optischen Kopplers 2 führt zum Messinterferometer, das in Common-Path-Geometrie ausgebildet ist, also einen teilweise gemeinsamen Interferometer-Strahlgang für Mess- und Referenzinterferometer aufweist. Das Referenzinterferometer wird hierbei durch einen Reflex an der optischen Austrittsfläche einer Gradientenindex-Linse 6 definiert, so dass eine konstante, insbesondere bekannte Distanz festgelegt ist, wobei weitere Rückreflektionen vermieden werden. Das Messinterferometer wird hingegen durch die Reflektion an der zu vermessenden Oberfläche 7 definiert. Das rückreflektierte Licht von Mess- und Referenzinterferometer wird schliesslich auf den Strahlungsdetektor 8 geführt, der vorzugsweise als InGaAs-Detektor mit einer Bandbreite von mehr als 100 MHz ausgebildet ist.

In Fig.2 werden die Hauptkomponenten zur Durchführung eines erfindungsgemässen Verfahrens als Blockschaltbild erläutert. Die von dem optischen Probenkopf OP aufgenommenen Signale werden über eine Kommunikationsverbindung 9a zur optischen Probenkopf-Messeinheit OPME geführt, wobei jedoch alternativ der Strahlungsdetektor auch in der optischen Probenkopf-Messeinheit OPME angeordnet sein kann, so dass anstelle der Kommunikationsverbindung 9a eine optische Verbindung, z.B. eine Faserverbindung, genutzt wird. Die Daten der optischen Probenkopf-Messeinheit OPME werden wiederum über eine Kommunikationsverbindung 9b an die Steuereinheit SE der Koordinatenmessmaschine KMM übertragen. Diese Steuereinheit überträgt ihrerseits entsprechende Steueranweisungen über die Kommunikationsverbindungen 9b, 9c und 9d an die optischen Probenkopf-Messeinheit OPM, die Koordinatenmessmaschine und insbesondere die Führungsmittel FM zur definiert abtastenden Führung des optischen Probenkopfes OP. Zur möglichen Auswertung und Kommunikation mit einem Bediener U dient eine Rechen- und Auswerteeinheit RAE.

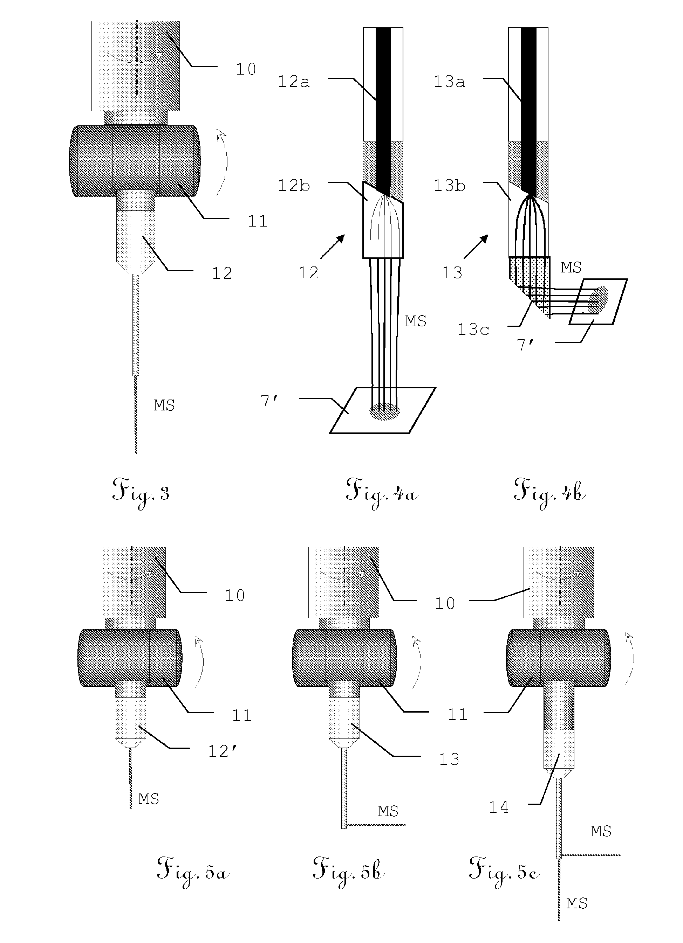

Fig.3 ist die Darstellung einer ersten Ausführungsform eines optischen Probenkopfes 12 für ein erfindungsgemässes Messgerät. Der Probenkopf wird durch ein Armelement 10 und ein Gelenk 11 als Führungsmittel definiert abtastend über die zu vermessende Oberfläche geführt, wobei auch eine Rotation des Gelenks 11 gegenüber dem Armelement 10 möglich ist. Durch die Rotierbarkeit gegenüber dem Armelement 10 und das nachfolgende Gelenk 11 kann der Probenkopf 12 gewinkelten oder stark veränderlichen Oberflächenverläufen gut folgen. Grundsätzlich könne jedoch noch weitere rotatorische oder translatorische Freiheitsgrade in die Führungsmittel integriert werden, um eine weiter verbesserte Führung des Probenkopfes 12 zu ermöglichen.

Der Probenkopf 12 weist wenigstens einen oberflächenseitigen Emissions- und Empfangsstrahlgang des Messstrahls MS auf. In dieser Ausführungsform werden die Strahlgänge durch eine dünne Röhre geführt, wobei im an diese Röhre anschliessenden dickeren Teil bereits der Strahlungsdetektor selbst oder aber Lichtleiter zur Weiterleitung an einen andernorts integrierten Strahlungsdetektor angeordnet sein kann. Der Probenkopf 12 kann durch die Führungsmittel so gesteuert werden, dass die Bedingung eines im wesentlichen senkrechten Auftreffens des Laserstrahls auf die Oberfläche eingehalten wird, insbesondere eine Abweichung von +/- 5° zur Flächennormalen nicht überschritten wird. Dabei kann der Probenkopf 12 so bewegt werden, dass dieser kontinuierlich mit relativ zur Oberflächentangente konstanter Ausrichtung verfahren wird, insbesondere mit senkrecht zur Oberflächentangente orientiertem Emissions- und Empfangsstrahlgang.

Fig.4a-b zeigt die schematische Darstellung des Strahlgangs in der ersten und einer weiteren Ausführungsform des optischen Probenkopfes für ein erfindungsgemässes Messgerät.

In Fig.4a wird der optische Strahlgang für die erste Ausführungsform des optischen Probenkopfs 12 veranschaulicht. Dabei dient eine Faser 12a zur Führung der zu emittierenden wie auch der reflektierten Messstrahlung MS. Die Emission erfolgt hierbei durch eine in dem röhrenförmigen Teil angeordneten Gradientenindex-Linse 12b, die die Messstrahlung auf die zu vermessende Oberfläche 7' emittiert und die von dort reflektierte Messstrahlung MS wieder in die Faser 12a einkoppelt.

In ähnlicher Weise wird der Fig.4b dargestellte Strahlgang für die unten in Fig.5b dargestellte Ausführungsform des optischen Probenkopfs 13 realisiert. Hier dienen ebenfalls eine Faser 13a und eine Gradientenindex-Linse 13b, zur Führung der zu emittierenden wie auch der reflektierten Messstrahlung MS. Die Emission auf die Oberfläche 7' erfolgt hierbei jedoch erst nach einer Umlenkung durch ein der Gradientenindex-Linse 13b nachgeordnetes Umlenkelement 13c, welches eine zur Längsachse des röhrenförmigen Teils des Probenkopfes 13 senkrechte Emissionsrichtung ermöglicht. Hierdurch können besonders vorteilhaft Bohrlöcher oder andere zylindrische Öffnungen oder Strukturen abgetastet werden.

Verschiedene Ausführungsformen des optischen Probenkopfes werden in einer Gesamtübersicht der Fig.5a-h gezeigt, wobei alle Varianten zur einfacheren Vergleichbarkeit mit Armelement 10 und Gelenk 11 als Führungsmittel dargestellt werden. Hierbei können erfindungsgemäss jedoch auch andere Ausgestaltungen der Führungsmittel zum Einsatz kommen, z.B. mit einem Kugelgelenk anstelle des Gelenks 11.

Die in Fig.5a dargestellte Variante 12' der ersten Ausführungsform verzichtet auf den dünnen röhrenförmigen Teil, was beispielsweise möglich ist, wenn vorwiegend ebene Flächen und keine Bohrungen oder kleine Strukturen vermessen werden müssen.

Fig.5b zeigt die bereits in Fig.4b erläuterte Variante eines Probenkopfes 13 mit rechtwinkliger Emission der Messstrahlung MS.

Der in Fig.5c gezeigte Probenkopf 14 stellt eine Kombination der Varianten von Fig.3 und Fig.5b dar. Hier wird der Strahlgang der Messstrahlung in zwei Kanäle aufgespalten, deren Emissions- und Empfangsrichtung orthogonal zueinander orientiert ist. Die Messkanäle können hierbei parallel oder sequentiell genutzt werden, wobei bei paralleler Verwendung entweder zwei Messanordnungen oder aber auch eine einzige Messanordnung mit einer Trennung der beiden Kanäle, z.B. durch unterschiedliche Polarisationsrichtungen, möglich ist. Eine solche Ausbildung des Probenkopfes erlaubt beispielsweise eine Vermessung von Kanten oder Stufen.

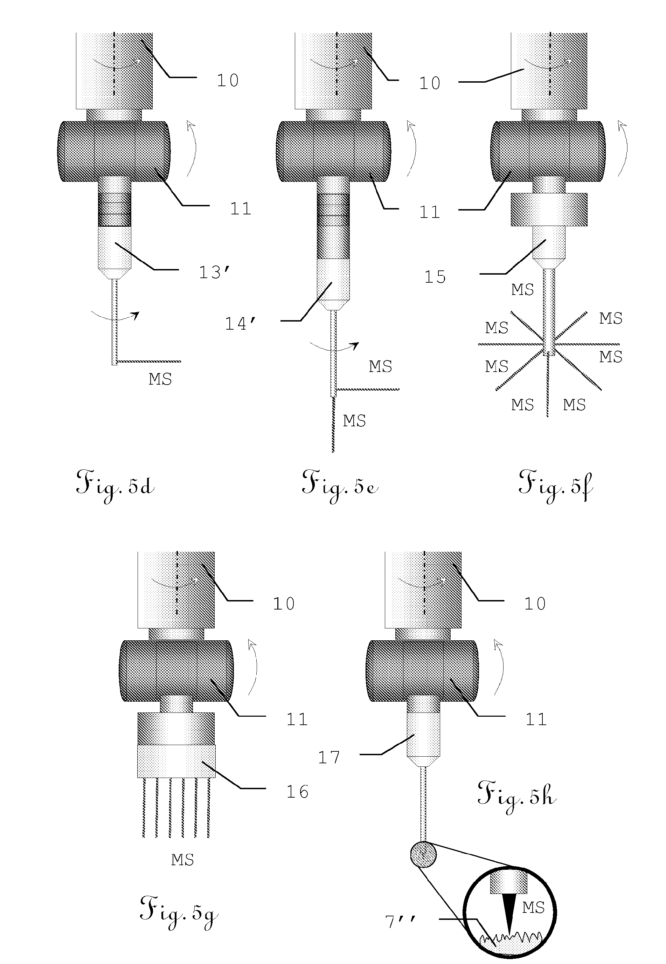

In Fig.5d und Fig.5e wird eine Modifikation der Ausführungsformen von Fig.5b und Fig.5c gezeigt, bei der der röhrenförmige Teil des Probenkopfes 13', 14' in seiner Längsachse und damit gegenüber dem Gelenk 11 rotierbar ausgebildet ist. Hierdurch kann mit dem Messstrahl MS eine kreisförmige Scanbewegung durchgeführt werden. Eine weitere Alternative stellt eine hier nicht dargestellte kreuzförmige Scanbewegung dar. Solche Scanbewegungen können insbesondere auch zur schnellen Grobmessung und damit zur Abschätzung der Lage der Flächennormalen im zu vermessenden Bereich der Oberfläche verwendet werden.

In den Fig.5f und Fig.5g werden Probenköpfe 15, 16 mit mehrkanaliger Strahlführung dargestellt, wobei auch hier eine parallele oder sequentiell-umschaltende Emission realisierbar sind. Diese Ausführungsformen erlauben die hochpräzise Vermessung von Öffnungen oder Flächen ohne grosse Veränderungen der Position des Probenkopfes 15, 16 oder aber bei reduzierter Genauigkeit der Messung eine abschätzende Grobmessung zu vielen Punkten in der Umgebung.

Fig.5h zeigt die Ausführungsform eines Probenkopfes 17 zur lokalen Feinmessung. Hierbei wird die Messstrahlung nicht kollimiert emittiert sondern im Nahbereich zur Auflösung einer fein strukturierten Oberfläche 7" fokussiert.

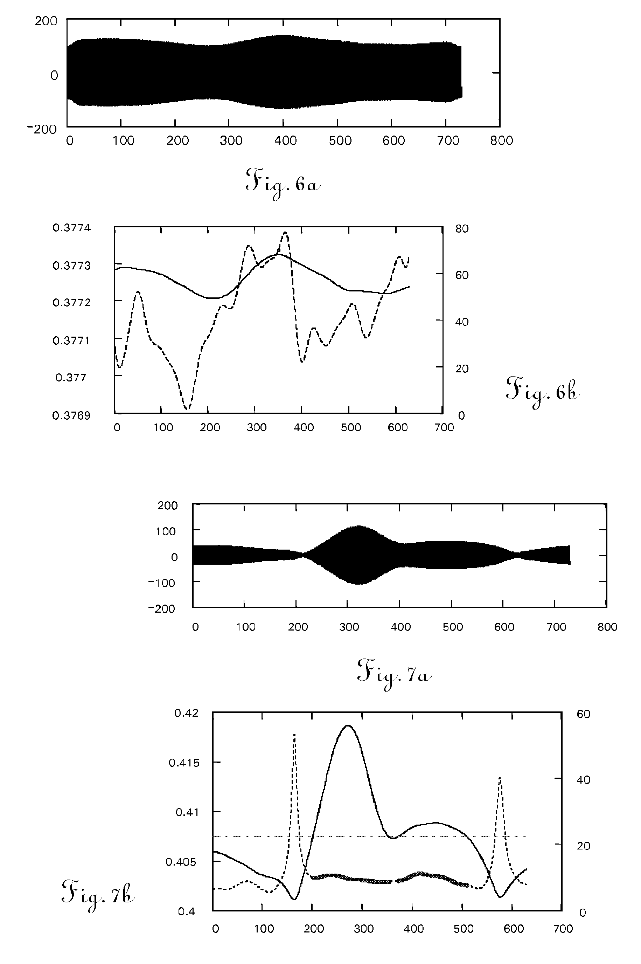

In den Fig.6a-b erfolgt die Darstellung von Messinterferogramm, Phasen- und Amplitudenverlauf für eine nicht gekippte rauhe Aluminiumoberfläche. Fig.6a zeigt hierbei ein gemessenes Interferogramm über einen Wellenlängenbereich von 50 nm. Die Einhüllende zeigt in diesem Wellenlängenbereich nur eine sehr schwache Variation. Fig.6b zeigt den Phasen- und Amplitudenverlauf zu obigem Interferogramm, wobei die Phase mit gestrichelter und die Amplitude mit durchgezogener Linie dargestellt sind.

Die Fig.7a-b zeigen die entsprechenden Darstellungen von Messinterferogramm, Phasen- und Amplitudenverlauf für die gleiche, jedoch gegenüber der Einfallsrichtung des Messstrahls gekippte Oberfläche. In Fig.7a ist in den Einschnürungsbereichen die Phaseninformation sehr undefiniert bis hin zu starken "Ausreißern". An dieser Stelle liegt eine destruktive Speckle-Interferenz im Faserkernbereich vor, der konstruktiv interferierende Teil ist seitlich verschoben, die allerdings aufgrund der Wellenlängenaghängigkeit nur in einem relativ kleinen Spektralbereich von wenigen nm vorliegt. Betrachtet man die Situation in der Faserebene, so wandert das eine Speckle wellenlängenabhängig um den Faserkern herum. Kommt das Speckle direkt auf dem Faserkern zu liegen, entspricht dieses einer korrekten Abbildung des Laserflecks auf der Oberfläche, was in der Messung einer gleichmäßigen Gewichtung der Distanzinformation über die schräge Fläche erlaubt, d.h. der Mittelwert kann in dieser Situation genau bestimmt werden. Bei einem verschobenen Speckle ist dieses nicht mehr möglich, da die Verschiebung in der Faserebene auch einer "scheinbaren" Verschiebung in der zu vermessenden Oberfläche entspricht, d.h. in diesem Fall weicht die mittlere Distanzinformation von dem tatsächlichen Mittelpunkt des Laserflecks ab. Auf diese Weise besteht ein Zusammenhang zwischen Amplitudenhöhe und genauer Mittenbestimmung des Laserflecks.

Bei einer adaptierten algorithmischen Auswertung als erster Ausführungsform des erfindungsgemäßen Verfahrens werden aufgrund des Schwellenwertes nur Phaseninformationen ausgewertet, die zu Amplitudenwerte oberhalb des Schwellwertes gehören, was in der Fig.7b durch den fettmarkierten Bereich der gestrichelten Linie, welche die Phase darstellt, verdeutlicht wird. Eine andere Möglichkeit ist die Amplitudengewichtung der Phasenwerte beim Entfernungsmessen für die Berechnung der Phaseninformation.

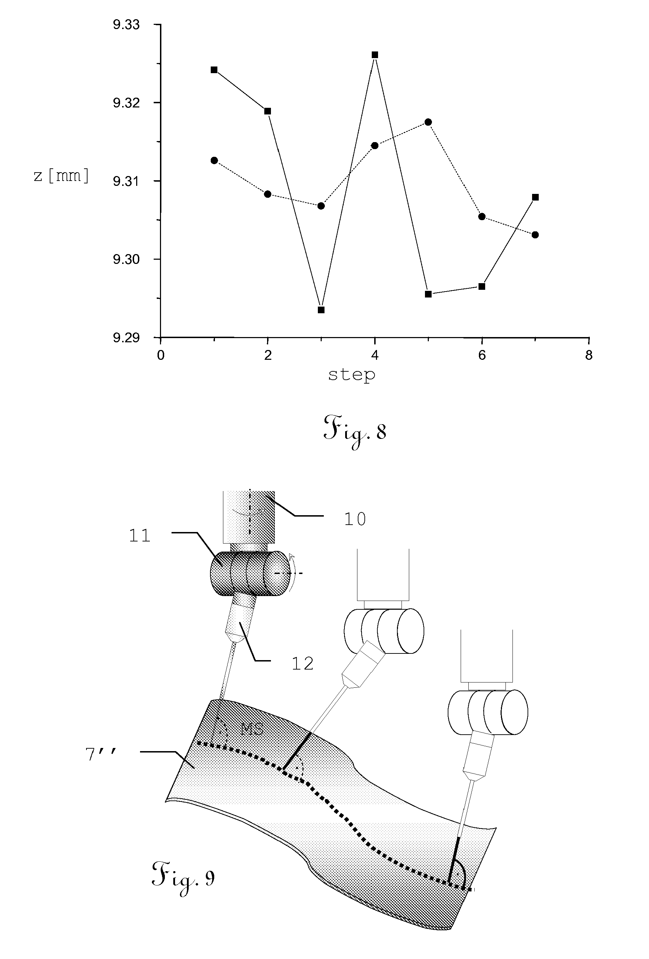

Fig.8 zeigt die dementsprechende Wirkung der ersten Ausführungsform des erfindungsgemässen Verfahrens für die in Fig.7a-b dargestellte gekippte rauhe Aluminiumoberfläche. Aufgetragen ist die gemessene Distanz in mm bei seitlicher Verschiebung des Targets in diskreten Schritten ohne hierbei die geometrische Distanz zu verändern. Die durchgezogene Linie entspricht den gemessenen Distanzen ohne Schwellwertkriterium, die mit gestrichelter Linie den Messungen mit Schwellwertkriterium. Wie klar zu erkennen ist, verringert sich die Schwankungsbreite der Meßwerte durch die Verwendung des Schwellwertkriteriums bei der Auswertung.

Fig.9 erläutert eine zweite Ausführungsform des erfindungsgemässen Verfahrens mit einem Erzeugen eines frequenzmodulierten Laserstrahls, Emittieren des Laserstrahls als Messstrahlung MS auf die Oberfläche 7'', Empfangen der von der Oberfläche 7" zurückgestreuten Messstrahlung MS und interferometrischen Entfernungsmessen von einem Bezugspunkt zur Oberfläche 7''. Hierbei wird die Laserstrahlung während eines abtastenden Führens über die zu vermessende Oberfläche 7" emittiert und empfangen, wobei Abweichungen eines senkrechten Auftreffens des Laserstrahls auf die Oberfläche beim abtastenden Führen des Probenkopfes 12 entlang des gestrichelt dargestellten Messpfades steuernd berücksichtigt werden, indem das Steuern so erfolgt, dass die Bedingung eines im wesentlichen senkrechten Auftreffens des Laserstrahls auf die Oberfläche 7" eingehalten wird, insbesondere eine Abweichung von +/- 5° zur Flächennormalen nicht überschritten wird. Durch diesen Steuerungsvorgang wird erreicht dass der Auftreffwinkel der Messstrahlung stets innerhalb eines engen Toleranzbereichs um die Senkrechte auf die Oberfläche 7'' bzw. deren Flächennormalen bleibt oder aber verwertbare Messungen nur dann durchgeführt werden, wenn diese Bedingung erfüllt ist.

Das Steuern des Probenkopfes 12 durch Gelenk 11 und Armelement 10 als Führungsmittel kann anhand des wellenlängenabhängigen Verlaufs der Amplitude der empfangenen Messstrahlung MS als Regelgrösse für das Emittieren erfolgen. Hierbei kann eine Variation des Winkels des Auftreffens des Laserstrahls erfolgen, das solange erfolgt, bis ein im wesentlichen wellenlängenunabhängiger Verlaufs der Amplitude erreicht ist. Alternativ oder ergänzend kann das Steuern unter Verwendung von Informationen über die Topographie der Oberfläche 7" erfolgen, insbesondere unter Verwendung eines Modells für die Oberfläche 7'', wobei das Modell vorzugsweise rechnergeneriert oder durch eine vorangehende Grobabtastung erstellt wird. Die Daten aus dem Model oder der Grobabtastung des zu messenden Objektes werden verwendet, um den Probenkopf 12 so zu positionieren, dass die Messstrahlung MS entlang der Flächennormalen ausgerichtet ist. Das Steuern kann auch unter Verwendung einer Extrapolation vorhergehender Entfernungsmessungen erfolgen, insbesondere unter Berücksichtigung vorgegebener maximaler und/oder minimaler Krümmungsradien der Oberfläche 7''.

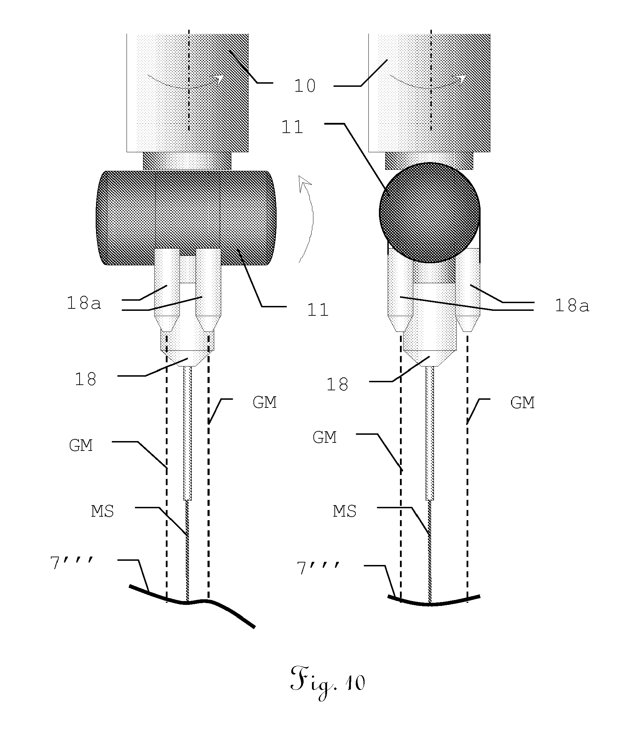

Eine weitere Möglichkeit bietet die Aufnahme von unterstützenden Grobmessungen zur Bestimmung des Verlaufs der Oberfläche 7'', wie dies beispielsweise mit der in Fig.10 dargestellten Ausführungsform eines Probenkopfes 18 mit parallelen Grobmessungen möglich ist.

Der Probenkopf 18 entspricht im wesentlichen der Variante in Fig.3, weist nun aber zusätzliche Messelemente 18a auf, die mit ihrer Grobmessachse GM achsparallel zur Emissionsachse der Messstrahlung MS ausgerichtet und ebenfalls schwenkbar am Gelenk 11 angeordnet sind. Diese Messelemente 18a können somit in gleicher Weise mit der Emissionsachse der Messstrahlung MS bewegt werden. Dabei kann die Zahl der Messelemente 18a unterschiedlich gewählt werden, wobei der Probenkopf 18 grundsätzlich wenigstens eine Komponente zur lokalen Grobmessung aufweist. In diesem Ausführungsbeispiel sind drei Messelemente 18a um den Korpus des Probenkörpers angeordnet, so dass eine parallele Dreipunktmessung erfolgen kann. Dies erlaubt das Steuern unter Verwendung von lokalen Grobmessungen in der Nähe des Auftreffpunktes der Messstrahlung MS auf die Oberfläche 7'''.

Die Messelemente 18a können hierbei eine Vielzahl von Messprinzipien verwenden, insbesondere können diese akustisch, insbesondere mittels Ultraschall, optisch, insbesondere mittels Triangulations-, Phasen- oder Laufzeitmessprinzip, mechanisch kontaktierend, insbesondere durch Auslenken eines Wegstreckensensors, induktiv, kapazitiv oder pneumatisch ausgelegt sein. Entsprechende Komponenten zur lokalen Grobmessung können damit beispielsweise einen der folgenden Sensoren aufweisen
- pneumatischen Sensor,
- Ultraschallsensor,
- taktilen Sensor,
- Lasertriangulationssensor,
- konfokaler Wegsensor,
- Laser-Laufzeit-Wegsensor,
- Laser-Phasenmess-Wegsensor,
- kapazitiver Wegsensor,
- Wirbelstrom-Wegsensor oder
- induktiver Wegsensor.

Neben der in Fig.10 dargestellten Ausführungsform können erfindungsgemäss auch weitere bzw. abweichende Anordnungen von Sensoren zur Grobmessung Verwendung finden. So ist beispielsweise auch eine unabhängige Bewegbarkeit realisierbar, so dass parallel zum hochpräzisen Messvorgang unabhängig und an anderer Stelle eine Grobmessung zur Aufnahme der Oberflächentopographie erfolgt. Insbesondere kann dieser Grobmessvorgang auch auf anderen als abtastenden oder punktweise messenden Verfahren beruhen, wie sie z.B. aus der Stereo-Photogrammetrie bekannt sind.

Die in den Figuren dargestellten Ausführungsbeispiele dienen der Erläuterung. Insbesondere die Darstellung der Ausführungsformen der Probenköpfe erfolgt rein schematisch. Je nach tatsächlichen Gegebenheiten können sich Anordnungen ergeben. Auch können die Führungsmittel je nach Anwendungszweck oder Messmaschinentyp deutlich von den dargestellten Mitteln abweichen.

## Patentansprüche

1. Verfahren zur Vermessung von Oberflächen (7,7',7'',7'''), insbesondere von industriellen Werkstücken, mit wenigstens einem
- Erzeugen eines frequenzmodulierten Laserstrahls,
- Emittieren des Laserstrahls als Messstrahlung (MS) auf die Oberfläche,
- Empfangen der von der Oberfläche (7,7',7'',7''') zurückgestreuten Messstrahlung (MS) und
- interferometrischen Entfernungsmessen von einem Bezugspunkt zur Oberfläche (7,7',7'',7'''),
wobei die Messstrahlung (MS) während eines abtastenden Führens über die zu vermessende Oberfläche emittiert und empfangen wird,
**dadurch gekennzeichnet, dass**
Abweichungen vom im wesentlichen senkrechten Auftreffen der Messstrahlung (MS) auf die Oberfläche (7,7',7'',7''') beim Entfernungsmessen algorithmisch berücksichtigt und/oder beim abtastenden Führen durch Steuern des Emittierens der Messstrahlung (MS) vermieden oder verringert werden.

2. Verfahren nach Anspruch 1,
**dadurch gekennzeichnet, dass**
beim Entfernungsmessen für die Berechnung der Phaseninformation nur Amplitudenwerte im Interferogramm für die zurückgestreute Messstrahlung (MS) berücksichtigt werden, die oberhalb eines Schwellenwertes liegen.

3. Verfahren nach Anspruch 1,
**dadurch gekennzeichnet, dass**
beim Entfernungsmessen für die Berechnung der Phaseninformation eine Amplitudengewichtung der Phasenwerte erfolgt.

4. Verfahren nach einem der vorangehenden Ansprüche,
**dadurch gekennzeichnet, dass**
beim abtastenden Führen ein Steuern des Emittierens so erfolgt, dass die Bedingung eines im wesentlichen senkrechten Auftreffens der Messstrahlung (MS) auf die Oberfläche (7,7',7'',7''') beim Entfernungsmessen eingehalten wird, insbesondere eine Abweichung von +/-5° zur Flächennormalen nicht überschritten wird.

5. Verfahren nach Anspruch 4,
**dadurch gekennzeichnet, dass**
das Steuern anhand des wellenlängenabhängigen Verlaufs der Amplitude der empfangenen Messstrahlung (MS) als Regelgrösse für das Emittieren erfolgt, insbesondere durch eine Variation des Auftreffens der Messstrahlung (MS) bis zum Auftreten eines im wesentlichen wellenlängenunabhängigen Verlaufs der Amplitude.

6. Verfahren nach Anspruch 4 oder 5,
**dadurch gekennzeichnet, dass**
das Steuern unter Verwendung von Informationen über die Topographie der Oberfläche (7,7',7''7''') erfolgt, insbesondere unter Verwendung eines Modells der Oberfläche (7,7',7'',7'''), wobei das Modell vorzugsweise rechnergeneriert oder durch eine vorangehende Grobabtastung erstellt wird.

7. Verfahren nach einem der Ansprüche 4 bis 6,
**dadurch gekennzeichnet, dass**
das Steuern unter Verwendung von lokalen Grobmessungen in der Nähe des Auftreffpunktes der Messstrahlung (MS) erfolgt, insbesondere durch parallele oder sequentielle Grobmessungen zu drei Messpunkten.

8. Verfahren nach einem der Ansprüche 6 oder 7,
**dadurch gekennzeichnet, dass**
wenigstens eines der folgende Messprinzipien für Grobmessungen oder Grobabtastungen verwendet werden
- akustisch, insbesondere mittels Ultraschall,
- optisch, insbesondere mittels Triangulations-, Phasen- oder Laufzeitmessprinzip,
- mechanisch kontaktierend, insbesondere durch Auslenken eines Wegstreckensensors,
- induktiv,
- kapazitiv,
- pneumatisch.

9. Verfahren nach einem der Ansprüche 4 bis 8,
**dadurch gekennzeichnet, dass**
das Steuern unter Verwendung einer Extrapolation vorhergehender Entfernungsmessungen erfolgt, insbesondere unter Berücksichtigung vorgegebener maximaler und/oder minimaler Krümmungsradien der Oberfläche (7,7',7'',7''').

10. Verfahren nach einem der vorangehenden Ansprüche,
**dadurch gekennzeichnet, dass**
ein interferometrisches Referenzmessen über eine konstante, insbesondere bekannte Distanz erfolgt.

11. Messgerät zur Vermessung von Oberflächen (7,7',7'',7'''), insbesondere von industriellen Werkstücken, mit wenigstens
• Führungsmitteln zur definiert abtastenden Führung eines Probenkopfes (12-18,12'-14') über die zu vermessende Oberfläche (7,7',7'',7'''),
• einer interferometrischen
Entfernungsmessanordnung mit
- einer frequenzmodulierten Laserquelle (1) zur Erzeugung wenigstens eines Laserstrahls als Messstrahlung (MS),
- einem Strahlungsdetektor (8) zum Empfang der von der Oberfläche zurückgestreuten
Messstrahlung (MS),
wobei der Probenkopf (12-18,12'-14') wenigstens einen Emissions- und Empfangsstrahlgang zur Emission der Messstrahlung (MS) aufweist,
**dadurch gekennzeichnet, dass**
die Führungsmittel so gesteuert werden, dass die Bedingung eines im wesentlichen senkrechten Auftreffens der Messstrahlung (MS) auf die Oberfläche (7,7',7'',7''') eingehalten wird, insbesondere eine Abweichung von +/- 5° zur Flächennormalen nicht überschritten wird.

12. Messgerät nach Anspruch 11,
**dadurch gekennzeichnet, dass**
die Führungsmittel so gesteuert werden, dass der Probenkopf (12-18,12'-14') kontinuierlich mit relativ zur Oberflächentangente konstanter Ausrichtung bewegt wird, insbesondere mit senkrecht zur Oberflächentangente orientiertem Emissions- und Empfangsstrahlgang.

13. Messgerät nach Anspruch 11 oder 12,
**dadurch gekennzeichnet, dass**
der Probenkopf (14,14',15,16) durch mehrere parallele und/oder umschaltbare Strahlgänge mehrkanalig ausgebildet ist.

14. Messgerät nach einem der Ansprüche 11 bis 13,
**dadurch gekennzeichnet, dass**
der Probenkopf (13',14') zur Durchführung einer kreuz-oder kreisförmigen Scanbewegung der Messstrahlung (MS) ausgebildet ist.

15. Messgerät nach einem der Ansprüche 11 bis 14,
**dadurch gekennzeichnet, dass**
der Probenkopf (18) wenigstens eine Komponente (18a) zur lokalen Grobmessung in der Nähe des Auftreffpunktes der Messstrahlung (MS) aufweist.

16. Messgerät nach Anspruche 15,
**dadurch gekennzeichnet, dass**
die Komponente (18a) zur lokalen Grobmessung wenigstens eine der folgenden Sensoren aufweist
- pneumatischen Sensor,
- taktilen Sensor,
- Ultraschallsensor,
- Lasertriangulationssensor,
- konfokaler Wegsensor,
- Laser-Laufzeit-Wegsensor,
- Laser-Phasenmess-Wegsensor,
- kapazitiver Wegsensor,
- Wirbelstrom-Wegsensor oder
- induktiver Wegsensor.

17. Messgerät nach einem der Ansprüche 11 bis 16,
**dadurch gekennzeichnet, dass**
die interferometrische Entfernungsmessanordnung ein Kalibrierinterferometer (4) aufweist, insbesondere in Etalon- oder Mach-Zehnder-Konfiguration.

18. Messgerät nach einem der Ansprüche 11 bis 17,
**dadurch gekennzeichnet, dass**
die frequenzmodulierten Laserquelle (1) eine zentrale Wellenlänge zwischen 1,3 und 1,55 µm aufweist.

19. Messgerät nach einem der Ansprüche 11 bis 18,
**dadurch gekennzeichnet, dass**
die frequenzmodulierten Laserquelle (1) einen durchstimmbaren Wellenlängenbereich von mehr als 40 nm aufweist.

20. Messgerät nach einem der Ansprüche 11 bis 19,
**dadurch gekennzeichnet, dass**
die frequenzmodulierten Laserquelle (1) eine dynamische Linienbreite von unter 0,02 nm und eine Kohärenzlänge von mehr als 60 nm aufweist.

21. Messgerät nach einem der Ansprüche 11 bis 20,
**dadurch gekennzeichnet, dass**
die frequenzmodulierten Laserquelle (1) als Faser-Ringlaser mit einem optischen Hableiterverstärker-Element (1b) ausgebildet ist.

22. Messgerät nach einem der Ansprüche 11 bis 21,
**dadurch gekennzeichnet, dass**
die frequenzmodulierten Laserquelle (1) ein Fabry-Perot-Filter oder ein akustisch modulierbares Fibre-Bragg-Grating (1c) aufweist.

23. Messgerät nach einem der Ansprüche 11 bis 22,
**dadurch gekennzeichnet, dass**
der Strahlungsdetektor ein InGaAs-Detektor (8) mit einer Bandbreite von mehr als 100 MHz ist.

24. Computerprogrammprodukt als Aufzeichnung auf einem Datenträger oder als elektromagnetische Trägerwelle mit Codesequenzen zur Durchführung des Verfahrens nach einem der Ansprüche 1 bis 10 in einer Rechen- und Auswerteeinheit (RAE).
